# EUROPEAN PATENT APPLICATION

(11) **EP 4 564 184 A1**
(43) Date of publication of application: **04.06.2025**
(21) Application number: 23846247.7
(22) Date of filing: 12.07.2023
(51) Int. Cl.: G06F 13/362, G06F 13/37, G09G 3/20, G09G 3/32, G09G 3/3208, G09G 3/34, G09G 3/36

(54) **COMMUNICATION DEVICE, DRIVE DEVICE, DISPLAY DEVICE, AND COMMUNICATION METHOD**

(30) Priority: 29.07.2022 JP 2022121130
(71) Applicant: Sony Group Corporation, Tokyo 108-0075 (JP); Sony Semiconductor Solutions Corporation, Atsugi-shi, Kanagawa 243-0014 (JP)
(72) Inventor: AKIYAMA, Hideki, Tokyo 108-0075 (JP); TOBARI, Takahiro, Atsugi-shi, Kanagawa 243-0014 (JP); SUGIYAMA, Takaaki, Atsugi-shi, Kanagawa 243-0014 (JP); HIRANO, Keisuke, Atsugi-shi, Kanagawa 243-0014 (JP)
(74) Representative: 2SPL Patentanwälte PartG mbB
(86) International application number: PCT/JP2023/025778
(87) International publication number: WO 2024/024516

(57) **Abstract**

A communication apparatus according to an embodiment of the present disclosure includes: a transmission device including a serial peripheral interface; and a plurality of reception devices configured to receive a data signal and a clock signal from the transmission device. The plurality of reception devices are coupled in a daisy chain via a signal line configured to communicate a chip select signal.

## Description

### Technical Field

The present disclosure relates to a communication apparatus, a driving apparatus, a display apparatus, and a communication method.

### Background Art

There has been proposed an apparatus including a plurality of serial peripheral interface (SPI) devices coupled in a daisy chain via Slave Data In (SDI) and Slave Data Out (SOD) of an SPI.

### Citation List

### Patent Literature

Patent Literature 1: WO2018/0276157

### Summary of the Invention

Communication apparatuses are desired to suppress an increase in their circuit size.

It is desired to provide a communication apparatus while suppressing an increase in its circuit size.

A communication apparatus according to an embodiment of the present disclosure includes: a transmission device including a serial peripheral interface; and a plurality of reception devices configured to receive a data signal and a clock signal from the transmission device. The plurality of reception devices are coupled in a daisy chain via a signal line configured to communicate a chip select signal.

A driving apparatus according to an embodiment of the present disclosure includes: a plurality of driving sections configured to drive light-emitting elements; and a control section that includes a serial peripheral interface and is configured to control the driving sections. The driving sections are configured to receive a data signal and a clock signal from the control section. The plurality of driving sections are coupled in a daisy chain via a signal line configured to communicate a chip select signal.

A display apparatus according to an embodiment of the present disclosure includes: a light source including a light-emitting element; and a light-emission control section configured to control the light source. The light-emission control section includes: a plurality of driving sections configured to drive light-emitting elements; and a control section that includes a serial peripheral interface and is configured to control the driving sections. The driving sections are configured to receive a data signal and a clock signal from the control section. The plurality of driving sections are coupled in a daisy chain via a signal line configured to communicate a chip select signal.

A communication method according to an embodiment of the present disclosure is a communication method between a transmission device including a serial peripheral interface and a plurality of reception devices coupled in a daisy chain. The communication method includes: transmitting a chip select signal to only one of the plurality of reception devices; and transmitting the chip select signal from the one of the reception devices.

### Brief Description of the Drawings

[FIG. 1] FIG. 1 is a diagram illustrating a schematic configuration example of a light source driving system according to an embodiment of the present disclosure.
[FIG. 2] FIG. 2 is a diagram illustrating a configuration example of a driving apparatus according to the embodiment of the present disclosure.
[FIG. 3] FIG. 3 is a diagram for describing an example of communication performed in the driving apparatus according to the embodiment of the present disclosure.
[FIG. 4] FIG. 4 is a timing diagram illustrating an operation example of the driving apparatus according to the embodiment of the present disclosure.
[FIG. 5] FIG. 5 is a diagram illustrating an example of arrangement of a control section and driving sections according to the embodiment of the present disclosure.
[FIG. 6] FIG. 6 is a diagram for describing an example of communication performed in the driving apparatus according to the embodiment of the present disclosure.
[FIG. 7A] FIG. 7A is a diagram for describing an example of communication performed in the driving apparatus according to a modification of the present disclosure.
[FIG. 7B] FIG. 7B is a diagram for describing the example of communication performed in the driving apparatus according to the modification of the present disclosure.
[FIG. 8] FIG. 8 is a diagram illustrating an example of appearance of a display apparatus.
[FIG. 9] FIG. 9 is a diagram illustrating a configuration example of a main body section of the display apparatus.

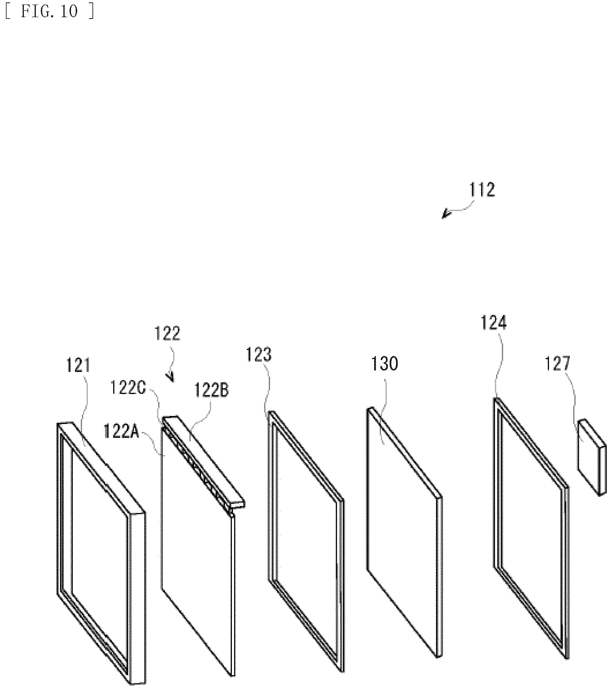

[FIG. 10] FIG. 10 is a diagram illustrating a configuration example of a panel module of the display apparatus.

### Modes for Carrying Out the Invention

Next, with reference to drawings, details of embodiments of the present disclosure will be described. It is to be noted that the description will be given in the following order.
1. Embodiment
2. Modification
3. Application Example

### <1. Embodiment>

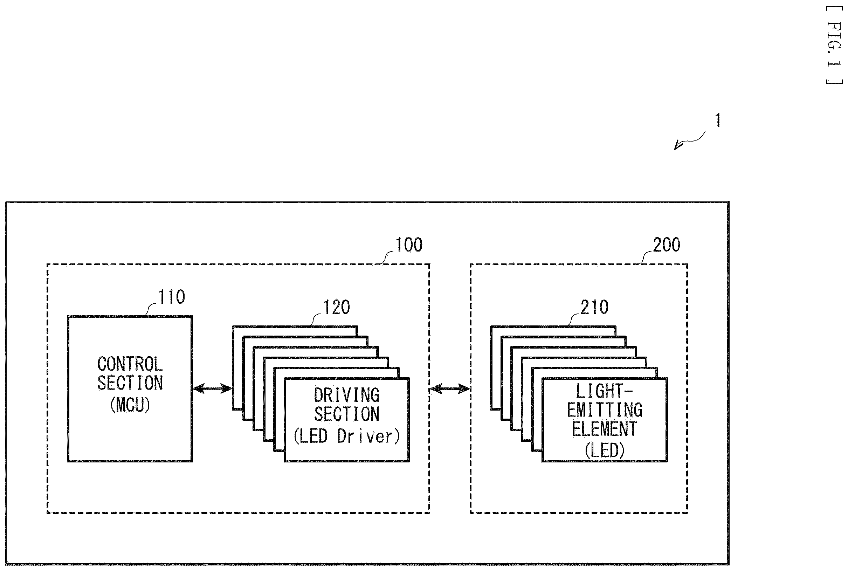

FIG. 1 is a diagram illustrating a schematic configuration example of a light source driving system that is an example of a communication system according to an embodiment of the present disclosure. The light source driving system 1 that is an example of the communication system includes a driving apparatus 100 and a light source 200. The driving apparatus 100 is an example of a communication apparatus according to the present disclosure.

The light source driving system 1 is a system that makes it possible to drive the light source 200. The light source driving system 1 is a system (or apparatus) that makes it possible to control light emission from the light source 200, and may also be said as a light source control system. The light source driving system 1 is a system that makes it possible to control a backlight.

The light source driving system 1 may be applicable to various kinds of display apparatuses such as televisions (TV) or monitors. Examples of the display apparatus include display apparatuses using a liquid crystal panel, an organic electroluminescence (EL) panel, a light-emitting diode (LED) panel, or the like.

The light source 200 includes a plurality of light-emitting elements 210. For example, the light-emitting element 210 is a light emitting diode (LED). The light source 200 may include the plurality of light-emitting elements 210 that is twodimensionally arranged in a matrix form. The light-emitting elements 21 of the light source 200 may generate light and emit the light to an outside. It is to be noted that the light-emitting elements 21 may be organic EL elements.

The driving apparatus 100 is configured to drive the light source 200. As illustrated in FIG. 1, the driving apparatus 100 that is an example of the communication apparatus includes a control section 110 and a plurality of driving sections 120. The control section 110 is an example of a transmission device. The driving section 120 is an example of a reception device. It is to be noted that the driving apparatus 100 is a light-emission control section and may also be said as a control apparatus configured to control the light source 200.

The control section 110 includes a processor and memory (ROM, RAM, and the like), and is configured to perform various kinds of signal processing. The control section 110 performs the signal processing (information processing) by loading and executing a program embedded inside. The control section 110 receives a clock given from the outside or data or the like for instructing on operation modes, and controls respective sections of the driving apparatus 100 (light-emission control section). The control section 110 may also be said as a signal processing section (signal processing circuit).

The control section 110 is configured to control the plurality of driving sections 120. The control section 110 is a control circuit and is implemented by a microcontroller unit (MCU), for example. The control section 110 may include a serial peripheral interface and control the driving sections 120.

The control section 110 supplies a signal for controlling the driving sections 120 to the driving sections 120 and controls operation of the driving sections 120. The control section 110 generates a signal related to brightness (luminance) of light of the light-emitting elements 210 of the light source 200. For example, the control section 110 transmits, to the respective driving sections 120, a signal related to magnitudes of voltage and electric current to be supplied to the respective light-emitting elements 210 of the light source 200.

The driving sections 120 are configured to drive the light-emitting elements 210. The driving section 120 may be a driving circuit and control operation of the light-emitting element 210. For example, the driving section 120 is configured to control the voltage and electric current to be supplied to the respective light-emitting element 210 of the light source 200. For example, the driving section 120 is implemented by a plurality of circuits including a digital circuit section, a digital-to-analog converter (DAC) section, an amplifier circuit, and the like. The digital circuit section makes it possible to execute digital signal processing.

As schematically illustrated in FIG. 1, the driving sections 120 are provided for the respective light-emitting elements 210. The driving section 120 may supply the voltage and electric current for driving the light-emitting element 210 to the light-emitting element 210 coupled to the driving section 120, and may control light emission from the light-emitting element 210. The driving section 120 may also be said as a driver IC (driver circuit). In the light source driving system 1, the control section 110 and the respective driving sections 120 communicate with each other in accordance with a communication protocol using the SPI and control the respective light-emitting elements 210 of the light source 200. It is to be noted that a single driving section 120 may be provided for a plurality of the light-emitting elements 210.

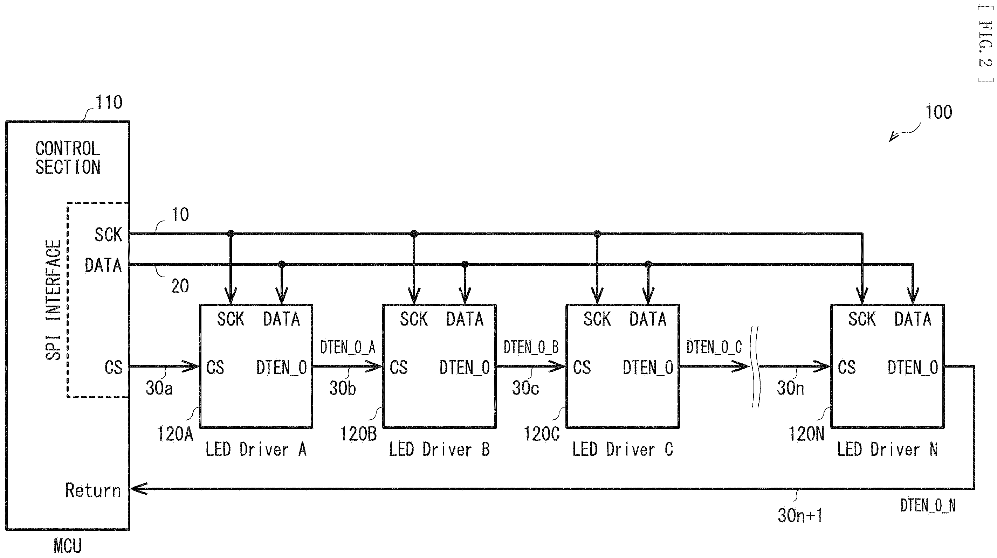

FIG. 2 is a diagram illustrating a configuration example of the driving apparatus that is an example of the communication apparatus according to the embodiment. As described above, the driving apparatus 100 includes the control section 110 and the plurality of driving sections 120 (driving section 120A to driving section 120N in FIG. 2). As illustrated in FIG. 2, the plurality of driving sections 120 (driving sections 120 (driving section 120A to driving section 120N) are coupled in a daisy chain. The control section 110 is implemented by the microcontroller (MCU) including the SPI interface using serial communication. The control section 110 is a host device, and the driving sections 120 are client devices.

As illustrated in FIG. 2, the control section 110 may include an SCK terminal, a DATA terminal, and a chip select (CS) terminal as the serial peripheral interface. The control section 110 also includes a Return terminal. It is to be noted that the DATA terminal of the control section 110 is also known by other names including MOSI terminal, for example.

In the example illustrated in FIG. 2, the driving section 120A to the driving section 120N each include an interface compatible with the SPI and are implemented by an LED driver IC. The driving section 120A to the driving section 120N each include an SCK terminal, a DATA terminal, a CS terminal, and a DTEN_O terminal. It is to be noted that the DATA terminal of the driving section 120 is also known by other names including SDI terminal, for example.

The driving apparatus 100 is provided with a signal line 10, a signal line 20, and a signal line 30 (signal line 30a to signal line 30n+1 in FIG. 2). The signal line 10 is a signal line that makes it possible to communicate a clock signal SCK from the control section 110. The signal line 20 is a signal line that makes it possible to communicate a data signal DATA from the control section 110.

The signal line 10 and the signal line 20 are wired in common between the driving section 120A and the driving section 120N. In addition, the signal line 30 is a signal line that makes it possible to communicate a chip select signal SCK. The driving apparatus 100 includes the driving section 120A to the driving section 120N coupled in the daisy chain via the signal line 30. It can also be said that the plurality of driving sections 120 are in serial connection via the signal line 30.

The SCK terminal of the control section 110 is electrically coupled to the respective SCK terminals of the driving section 120A to the driving section 120N in common. In the example illustrated in FIG. 2, the SCK terminal of the control section 110 is coupled to the respective SCK terminals of the driving section 120A to the driving section 120N via the signal line 10 that makes it possible to transfer the clock signal SCK. The clock signal SCK is input in common from the control section 110 to the respective SCK terminals of the driving section 120A to the driving section 120N via the SCK terminal of the control section 110.

The DATA terminal of the control section 110 is electrically coupled to the respective DATA terminals of the driving section 120A to the driving section 120N in common. In the example illustrated in FIG. 2, the DATA terminal of the control section 110 is coupled to the respective DATA terminals of the driving section 120A to the driving section 120N via the signal line 20 that makes it possible to transfer the data signal DATA. The data signal DATA is input in common from the control section 110 to the respective DATA terminals of the driving section 120A to the driving section 120N via the DATA terminal of the control section 110.

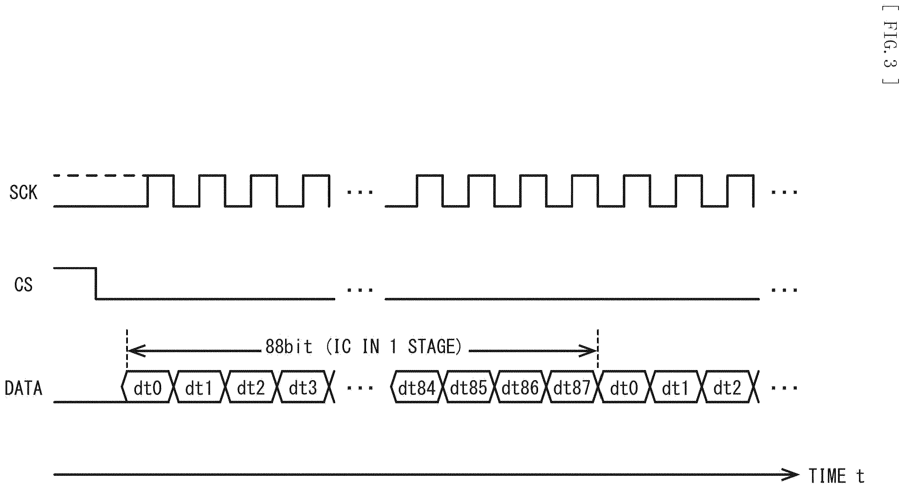

FIG. 3 is a diagram for describing an example of communication performed in the driving apparatus according to the embodiment. FIG. 3 schematically illustrates an example of a timing diagram of communication between the control section 110 and the driving sections 120. The control section 110 may use the SPI interface to communicate with the driving section 120A to the driving section 120N. The control section 110 and the driving sections 120A to 120N transmit/receive the chip select signal CS, the clock signal SCK, the data signal DATA, and the like.

The chip select signal CS is a signal for selecting a communication target. The clock signal SCK is a clock signal that alternates between a high level and a low level. The clock signal SCK is transmitted from the control section 110 to the driving sections 120A to 120N.

The data signal DATA is a data signal to be transmitted from the control section 110 to the driving sections 120A to 120N. For example, the data signal DATA has a data configuration as illustrated in the example in FIG. 3. In synchronization with a transition timing (rising edge or falling edge) of the clock signal SCK, the control section 110 transmits the data signal DATA serving as serial data.

Through the data signal DATA, for example, control information of the light-emitting elements 210 such as information related to driving voltage of the light-emitting elements 210 is transmitted from the control section 110 to the driving sections 120A to 120N. For example, in a case where the input chip select signal is in an active state, that is, in an enable state (for example, the low level), the driving sections 120A to 120N sample the data signal DATA and import and hold the data signal DATA in synchronization with rising of the chip select signal SCK.

As described above, the driving apparatus 100 according to the present embodiment includes the plurality of driving sections 120 (driving section 120A to driving section 120N) coupled in the daisy chain and is configured to sequentially forward (transfer) the chip select signal from the control section 110. The control section 110 transmits the chip select signal to only one of the plurality of driving sections 120 coupled in the daisy chain.

In the driving apparatus 100, the plurality of driving sections 120 is coupled in the daisy chain via the signal line 30, and the chip select signal is transferred sequentially to the plurality of driving sections 120. The chip select signal is delivered from one of the driving sections 120 to a next driving section 120. It can also be said that, a driving section 120 reoutputs the chip select signal to a driving section a driving section 120 in a next stage.

The chip select signal CS generated by the control section 110 is input into a driving section 120 in a first stage (driving section 120A in FIG. 2) among the plurality of driving sections 120. Into the driving sections 120 in second and subsequent stages, the chip select signal is input from the driving section 120 in the previous stage. The plurality of driving sections 120 serving as a client device group may operate like a shift register. The driving apparatus 100 makes it possible to control a large number of the driving sections 120 in accordance with a communication protocol using the SPI Peripheral that the MCU generally has. Next, the driving apparatus100 according to the present embodiment will be described more in detail.

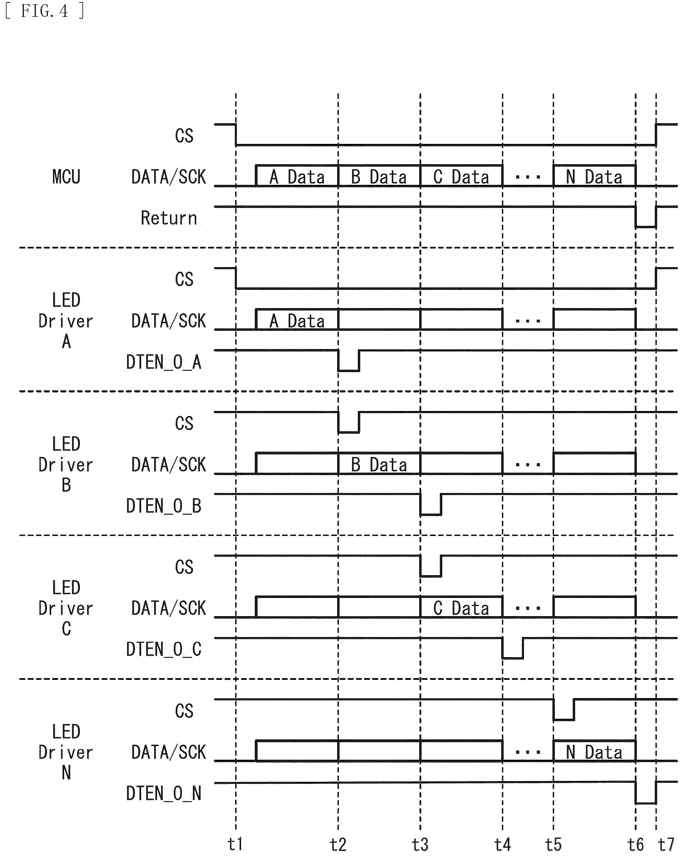

FIG. 4 is a timing diagram illustrating an operation example of the driving apparatus according to the embodiment. With reference to FIG. 2 and the timing diagram in FIG. 4, the operation example of the driving apparatus 100 will be described. As illustrated in FIG. 2, among the driving sections 120A to 120N, the driving section 120A in the first stage has the CS terminal that is electrically coupled to the CS terminal of the control section 110 via the signal line 30a. Into the CS terminal of the driving section 120A, the chip select signal CS is input from the control section 110. It can also be said that, the control section 110 may transmit the chip select signal CS to the first driving section 120A.

In a time period between time t1 to t2 illustrated in FIG. 4, the driving section 120A in the first stage uses its digital circuit section in the driving section 120A to import data in response to the chip select signal CS. In this case, the driving section 120A starts importing the data signal DATA in response to a falling edge of the chip select signal CS. It is to be noted that digital circuit sections of the driving sections 120 in the second and subsequent stages are in a stopped state since signals input into their CS terminals are at the high level, that is, in an inactive state.

The driving section 120A receives data for the driving section 120A that is a predetermined number of bits of data included in the data signal DATA input from the control section 110. It is to be noted that the number of bits, that is, the data length of data to be imported into each driving section 120 may be set in advance. The each driving section 120 may receive and sample the designated number of bits of data. For example, the each driving section 120 imports and holds several tens of bits of data (88-bit data including dt0 to dt87 in the example illustrated in FIG. 3).

After receiving the data for the driving section 120A, the driving section 120A outputs the chip select signal CS to the driving section 120B in the second stage. In the examples illustrated in FIG. 2 and FIG. 4, the driving section 120A outputs the chip select signal CS from the control section 110 to the driving section 120B via the DTEN_O terminal as a signal DTEN_O_A. The signal DTEN_O_A serves as a signal indicating completion of reception of the data for the driving section 120A.

The driving section 120B in the second stage has the CS terminal that is electrically coupled to the DTEN_O terminal of the driving section 120A in the first stage via the signal line 30b. Into the CS terminal of the driving section 120B, the signal DTEN_O_A is input from the driving section 120A as the chip select signal.

In a time period between time t2 to t3 illustrated in FIG. 4, the driving section 120B in the second stage uses its digital circuit section in the driving section 120B to import data in response to the signal DTEN_O_A serving as the chip select signal. In this case, the driving section 120B starts importing the data signal DATA in response to a falling edge of the signal DTEN_O_A. It is to be noted that digital circuit sections of the driving sections 120 in the third and subsequent stages are in the stopped state since signals input into their CS terminals are at the high level, that is, in the inactive state. The digital circuit section of the first stage is also in the stopped state.

The driving section 120B receives data for the driving section 120B that is a predetermined number of bits of data included behind the data for the driving section 120A in the data signal DATA input from the control section 110. After receiving the data for the driving section 120B, the driving section 120B outputs a signal DTEN_O_B to the driving section 120C via its DTEN_O terminal in response to the chip select signal CS. The signal DTEN_O_B serves as a signal indicating completion of reception of the data for the driving section 120B.

The driving section 120C in the third stage has the CS terminal that is electrically coupled to the DTEN_O terminal of the driving section 120B in the second stage via the signal line 30c. Into the CS terminal of the driving section 120C, the signal DTEN_O_B is input from the driving section 120B as the chip select signal.

In a time period between time t3 to t4 illustrated in FIG. 4, the driving section 120C in the third stage uses its digital circuit section in the driving section 120C to import data in response to the signal DTEN_O_B serving as the chip select signal. In this case, the driving section 120C starts importing the data signal DATA in response to a falling edge of the signal DTEN_O_B. It is to be noted that digital circuit sections of the driving sections 120 in the fourth and subsequent stages are in the stopped state since signals input into their CS terminals are at the high level, that is, in the inactive state. The digital circuit section of the second stage is also in the stopped state.

The driving section 120C receives data for the driving section 120C that is a predetermined number of bits of data included behind the data for the driving section 120B in the data signal DATA input from the control section 110. After receiving the data for the driving section 120C, the driving section 120C outputs a signal DTEN_O_C to the driving section 120D via its DTEN_O terminal in response to the chip select signal CS. The signal DTEN_O_C serves as a signal indicating completion of reception of the data for the driving section 120C. Also in the fourth and subsequent stages, data is imported and the chip select signal is forwarded (transferred).

In a time period between time t5 to t6 illustrated in FIG. 4, the driving section 120N in an N-th stage uses its digital circuit section in the driving section 120N to import data in response to a signal input into its CS terminal from the driving section 120 in the previous stage. The driving section 120N receives data for the driving section 120N that is a predetermined number of bits of data included in the data signal DATA input from the control section 110. After receiving the data for the driving section 120N, the driving section 120N outputs a signal DTEN_O_N to the control section 110 via its DTEN_O terminal in response to the chip select signal CS.

The control section 110 has the Return terminal that is electrically coupled to the DTEN_O terminal of the driving section 120N in the N-th stage via the signal line 30n+1. The signal DTEN_O_N is input from the driving section 120N into the Return terminal of the control section 110. The signal DTEN_O_N serves as a signal indicating completion of reception of the data.

As described above, in the driving apparatus 100 according to the present embodiment, the chip select signal is delivered to/from the plurality of driving sections 120 coupled in the daisy chain. The control section 110 uses the single chip select signal to sequentially select the respective driving sections 120, perform communication, and control the respective driving sections 120.

Accordingly, it is not necessary to install a digital circuit including a large number of address decoders or the like to address the respective driving sections 120 individually, a large number of external terminals for addressing, chip select signal lines dedicated to the respective driving sections 120, or the like. This makes it possible to suppress an increase in the circuit sizes of the driving apparatus 100 and the light source driving system 1. This makes it possible to suppress an increase in manufacturing cost of the driving apparatus 100 and the light source driving system 1.

According to the present embodiment, it is possible to select from among the respective driving sections 120 by using the single chip select signal regardless of the number of the driving sections 120 coupled to the control section 110, that is, the number of chips of the driver IC. This makes it possible to reduce the size of a region occupied by a wiring pattern, and improve degree of freedom of design layout. In addition, the number of controllable driving sections 120 is unlimited except for restrictions such as communication time or the number of buffers. The technology according to the present disclosure is favorably applicable to solutions for display elements with the driving sections 120, the number of which may increase or decrease depending on their display area.

In addition, as described above, the chip select signal is reoutput, that is, rebuffered in each driving section 120 in synchronization with the clock signal SCK. This makes it possible to perform data communication correctly even in a case where wiring has a long length, and it is possible to provide the driving apparatus 100 that makes it possible to be compatible with increase in the size of the display area. In addition, when the chip select signal in the active state is not supplied to a driving section 120, the digital circuit section of the driving section 120 enters the stopped state. This makes it possible to reduce electric power consumption. Therefore, it is possible to disperse electric power consumption timings and contribute to reduction in size of a power source.

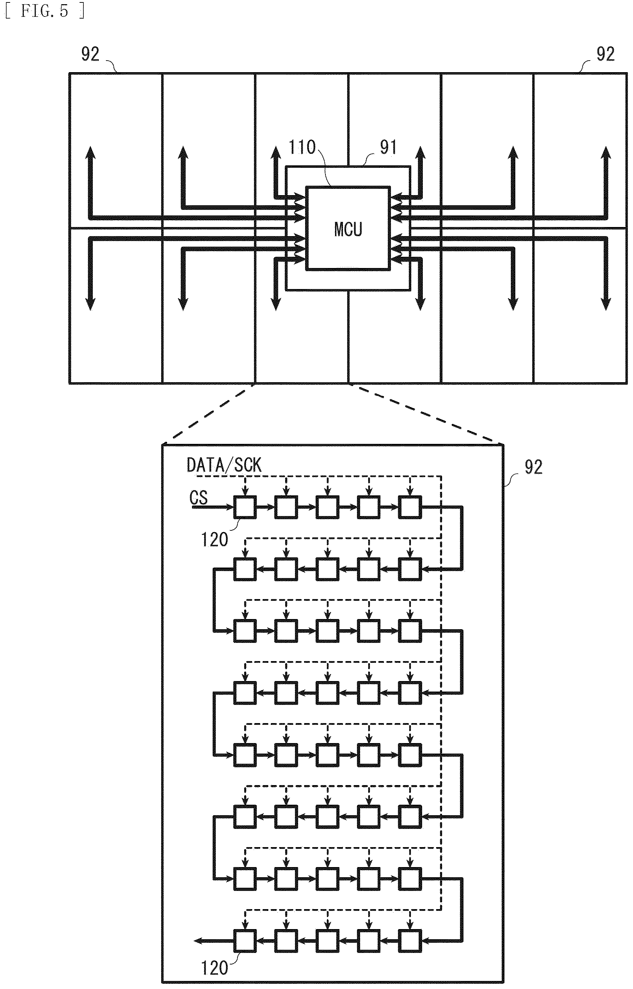

FIG. 5 is a diagram illustrating an example of arrangement of the control section and the driving sections according to the embodiment. As illustrated in FIG. 5, the driving apparatus 100 includes a first substrate 91 and a plurality of second substrates 92. In the example illustrated in FIG. 5, the number of the second substrates 92 in the driving apparatus 100 is 12. The first substrate 91 is provided with the control section 110. Each of the plurality of second substrates 92 is provided with the plurality of driving sections 120 (in FIG. 5, the number of the driving sections 120 is 40). As described above, the plurality of driving sections 120 on the second substrate 92 is coupled in the daisy chain.

In the example illustrated in FIG. 5, each second substrate 92 is provided with signal lines (the above-described signal lines 10, 20, and 30) for transferring the clock signal SCK, the data signal DATA, and the chip select signal CS. The chip select signal CS is supplied from the control section 110 to one (in other words, the first driving section 120) of the plurality of driving sections 120 on the second substrate 92.

By using the single chip select signal per each second substrate 92, it is possible to sequentially select the respective driving sections 120, perform communication, and control the respective driving sections 120. This makes it possible to suppress an increase in its circuit size. Note that, it is also possible to couple all the driving sections 120 of the plurality of second substrates 92 (for example, the number of the second substrates 92 is 12) in the daisy chain and select/control the respective driving sections 120 by using the single chip select signal.

The example in which the driving sections 120 reoutput the chip select signal has been described above. However, it is also possible for the driving sections 120 to output the chip select signal subjected to pulse-width modulation (PWM). For example, the driving sections 120 may add data (status data) related to statuses of the driving sections 120 or the light-emitting elements 210 to the chip select signal by modulating the pulse width of the chip select signal, and may output the chip select signal. For example, a driving section 120 may output a chip select signal including status data related to amounts of electric current flowing into the light-emitting elements 210, to the control section 110 or another driving section 120 that is in a next stage and that is coupled to the driving section 120.

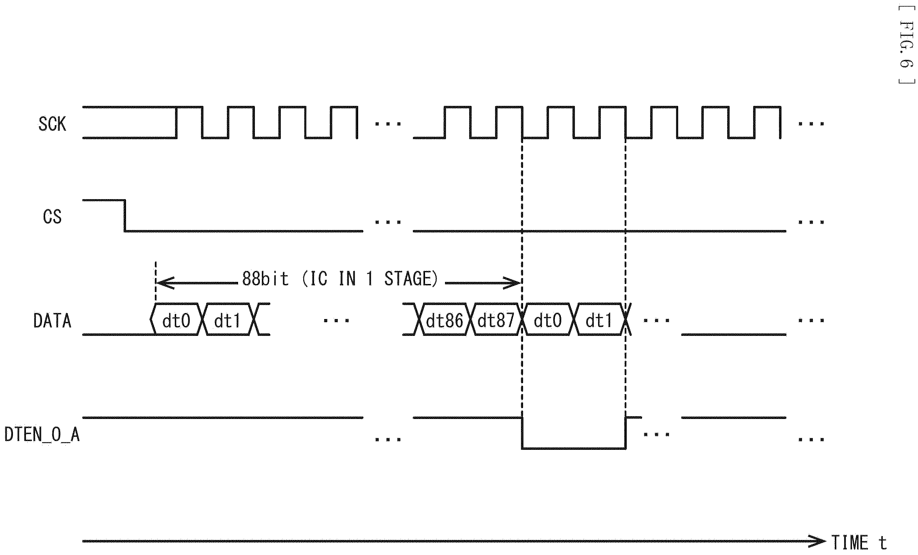

For example, as illustrated in the example in FIG. 6, the driving section 120A in the first stage may receive 88 bits of data for the driving section 120A, then set the signal DTEN_O_A to a low level in synchronization with falling of the clock signal SCK, and output the signal DTEN_O_A having the status data and the pulse width of the low level. The signal DTEN_O_A has the pulse width (pulse width of 2 bits in FIG. 6) corresponding to the status data.

In addition, each of the driving sections 120 in the second and subsequent stages may modulate the pulse width of the chip select signal input from the driving section 120 in the previous stage, and may output the signal DTEN_O that is the chip select signal to which the status data is added, for example. The driving section 120N in the N-th stage may output, to the control section 110, the signal DTEN_O_N to which status data of the respective driving sections 120 in the first to N-th stages is added. It is possible for the control section 110 to recognize the statuses of the driving sections 120 and control the respective driving sections 120 in response to the signal DTEN_O_N received via the Return terminal.

Note that, it is also possible to add only high-priority status data to the chip select signal and transmit the signal DTEN_O_N to the control section 110 from the driving section 120N in the N-th stage. For example, each driving section 120 may add, to the chip select signal, status data indicating a lack of driving voltage for light-emitting elements 210 as the high-priority data, and may output such a signal.

This makes it possible to increase voltage to be supplied to the light-emitting elements 210 and improve variation or the like in brightness (luminance) of light from the light-emitting elements 210 in a case where amounts of electric current of the light-emitting elements 210 is not enough dues to variation in threshold voltage of the light-emitting elements 21 (for example, LEDs). For example, it is possible to adjust power source voltage or the like in consideration of a light-emitting element 210 having a highest threshold voltage. This makes it possible to appropriately control driving of the light source 200.

### [Workings and Effects]

The communication apparatus (driving apparatus 100) according to the present embodiment includes: the transmission device (control section 110) including the serial peripheral interface; and the plurality of reception devices (driving sections 120) configured to receive the data signal and the clock signal from the transmission device. The plurality of reception devices are coupled in the daisy chain via the signal line (signal line 30) configured to communicate the chip select signal.

In the driving apparatus 100 according to the present embodiment, the chip select signal is delivered to/from the plurality of driving sections 120 coupled in the daisy chain. Accordingly, it is not necessary to install a large number of address decoders or the like to address the respective driving sections 120 individually. This makes it possible to suppress an increase in the circuit size of the driving apparatus 100.

Next, a modification of the present disclosure will be described. Hereinafter, structural elements that are similar to the above-described embodiment will be denoted with the same reference signs as the above-described embodiment, and repeated description will be omitted appropriately.

### <2. Modification>

The number of bits, that is, the data length of data to be imported in each driving section 120 may be variable depending on communication between the control section 110 and the driving section 120. As an example, the control section 110 stores data indicating a set value of the data length in a specific bit of data (for example, first bit of data) of the data signal DATA, and transmits the data signal DATA to the driving sections 120. In response to the received data signal DATA, the driving sections 120 recognize the data length per driving section 120 and control (set) the digital circuit sections or the like. This allows the control section 110 and the respective driving sections 120 to transmit/receive data of a changed data length.

As described above, the data length per driving section 120 may be set by transmitting the data signal DATA instructing to set the data length from the control section 110 to the driving sections 120. Note that, it is also possible for the control section 110 to store the data indicating the set value of the data length in a different bit of data other than the first bit and transmit such data.

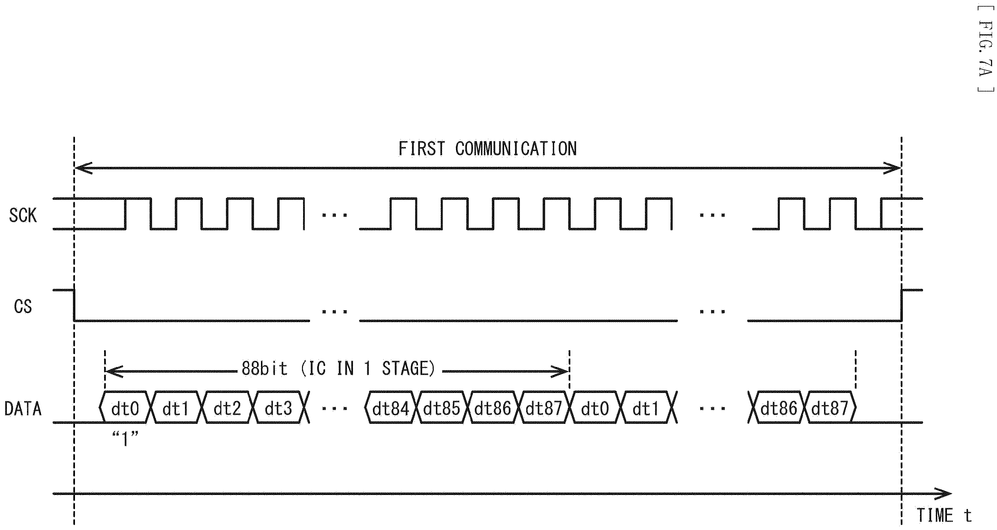

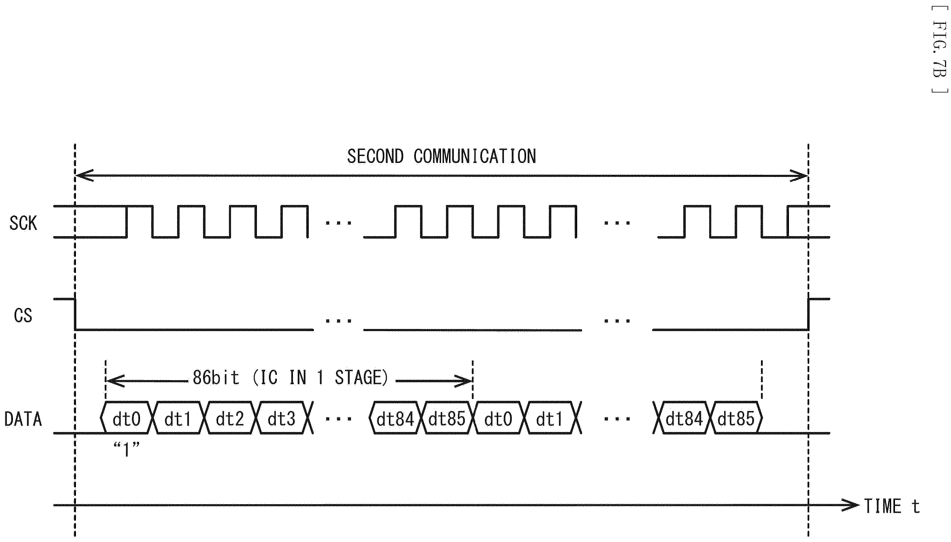

FIG. 7A and FIG. 7B is a diagram for describing an example of communication performed in the driving apparatus according to the modification of the present disclosure. FIG. 7A illustrates a case of performing first (first time) communication from the control section 110 to the respective driving sections 120 (for example, driving sections 120A to 120N). FIG. 7B illustrates a case of performing second communication from the control section 110 to the respective driving sections 120.

In the first communication illustrated in FIG. 7A, the control section 110 transmits a data signal having a bit length (for example, 88 bits) of a default value (default data length). As the data signal DATA, the control section 110 transmits the data signal including 88 bits of data per driving section 120 (in other words, single-stage driver IC). In this case, the control section 110 transmits, to each driving section 120, the data signal DATA including data dt0 of a first bit that is data indicating a set value of the data length.

Each driving section 120 receives and imports the 88-bit data and sets a data length to be imported in next and subsequent communication in response to the data dt0 of the first bit. For example, in a case where the data dt0 indicates "1", the data length is set to 86 bits. In a case where the data dt0 indicates "0", the data length is set to 88 bits. In the example illustrated in FIG. 7, each driving section 120 sets the data length to be imported in next and subsequent communication to 86 bits in response to the value "1" in the data dt0.

As illustrated in FIG. 7B, in the second communication subsequent to the first communication, the control section 110 transmits a data signal of 86 bits, that is, data of the changed bit length. As the data signal DATA, the control section 110 transmits the data signal including 86 bits of data per driving section 120. It is possible for each driving section 120 to receive and import 86-bit data.

### <3. Application Example>

The above-described light source driving system 1, driving apparatus 100, and the like may be applicable to various kinds of display apparatuses. The technology according to the present disclosure may be favorably applicable to display apparatuses that make it possible to perform backlight local dimming, for example.

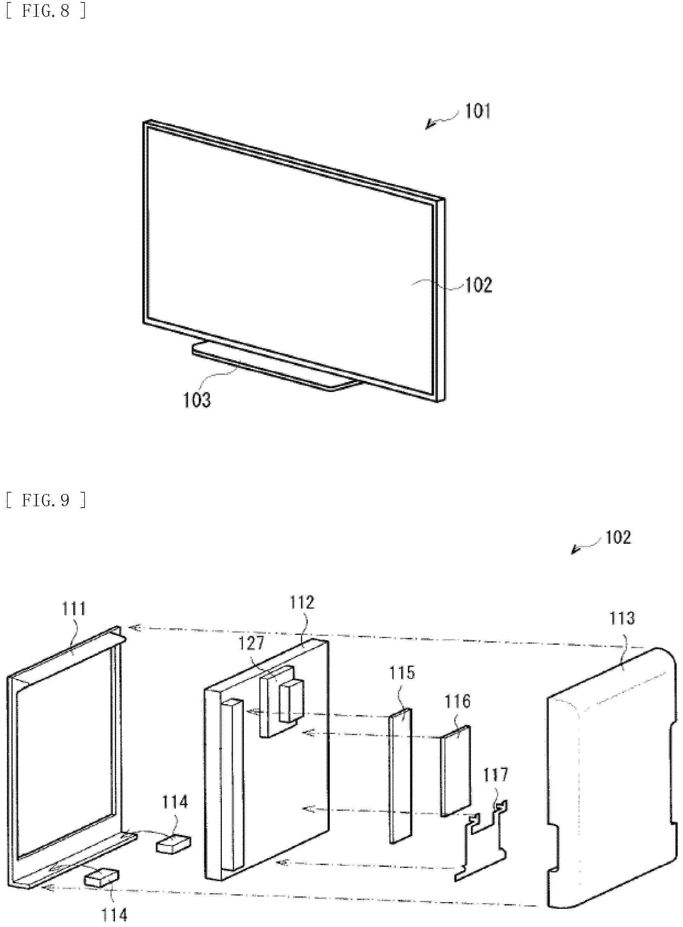

FIG. 8 illustrates appearance of a display apparatus. The display apparatus 101 includes s light source apparatus 130, and, for example, may be used as a flatscreen television apparatus. The display apparatus 101 has a configuration where a flat-platelike main body section 102 for image display is supported by a stand 103.

It is to be noted that the display apparatus 101 is placed on a horizontal plane such as a floor, a shelf, or a table and is used as a stationary type apparatus in a state where the stand 103 is attached to the main body section 102. However, it is also possible to use the display apparatus 101 as a wall-mounted apparatus in a state where the stand 103 is detached from the main body section 102.

FIG.9 is an exploded view of the main body section 102 illustrated in FIG. 8. The main body section 102 includes, for example, a front exterior member (bezel) 111, a panel module 112, and a rear exterior member (rear cover) 113 in this order from a front side (viewer side). The front exterior member 111 is a frame-shaped member that covers a front edge part of the panel module 112, and a pair (or more) of speakers 114 is disposed on a lower side thereof. It is to be noted that a case where no speaker is disposed like a computer monitor may also be considered.

The panel module 112 is fixed to the front exterior member 111. A power supply board 115 and a signal board 116 are mounted on a rear surface of the panel module 112, and a mounting fixture 117 is fixed to the rear surface of the panel module 112. The mounting fixture 117 serves to mount a wall-mounting bracket, components such as the boards, and the stand 103. The rear exterior member 113 covers the rear surface and side surfaces of the panel module 112.

FIG. 12B is an exploded view of the panel module 112 illustrated in FIG. 9. The panel module 112 includes, for example, a front housing (a top chassis) 121, a liquid crystal panel 122, a frame-shaped member (a middle chassis) 80, a light source apparatus 130, a rear housing (a back chassis) 124, and a timing controller board 127 in this order from the front side (viewer side).

The front housing 121 is a frame-shaped metallic component that covers a front edge part of the liquid crystal panel 122. The liquid crystal panel 122 includes, for example, a liquid crystal cell 122A, a source board 122B, and a flexible board 122C such as a chip on film (COF) that couples these components. The frame-shaped member 123 is a frame-shaped resin component that holds the liquid crystal panel 122. The rear housing 124 is a metallic component including iron (Fe) or any other meal material that accommodates the liquid crystal panel 122, the frame-shaped member 123, and the light source apparatus 130. The timing controller board 127 is also mounted on a rear surface of the rear housing 124.

**In** the display apparatus 101, an image is displayed by causing the liquid crystal panel 122 to selectively transmitting the light from the light source apparatus 130. By applying the technology according to the present disclosure to the display apparatus 101, reduction in the circuit size is expected, for example.

The technology according to the present disclosure is applicable to various products. For example, the communication system, the communication apparatus, and the like according to the present disclosure is applicable to various kinds of electronic equipment including the serial peripheral interface.

The present technology has been described above with reference to the embodiment, the modification, and the application example. However, the present technology is not limited thereto, and various kinds of modifications thereof can be made. For example, the above modification has been described as the modification of the embodiment. In addition, structural elements according to the respective modifications can be used in combination as appropriate.

The communication apparatus according to an embodiment of the present disclosure includes: the transmission device including the serial peripheral interface; and the plurality of reception devices configured to receive the data signal and the clock signal from the transmission device. The plurality of reception devices are coupled in the daisy chain via the signal line configured to communicate the chip select signal. Accordingly, it is not necessary to install a large number of external terminals, a large number of address decoders to address the reception devices individually, or the like. This makes it possible to suppress an increase in the circuit size.

It is to be noted that the effects described herein are only for illustrative purposes and there may be other effects. In addition, the present technology may be configured as follows.
(1) A communication apparatus including:
   a transmission device including a serial peripheral interface; and
   a plurality of reception devices configured to receive a data signal and a clock signal from the transmission device,
   in which the plurality of reception devices are coupled in a daisy chain via a signal line configured to communicate a chip select signal.
(2) The communication apparatus according to (1), in which the transmission device is configured to transmit the chip select signal to only one of the plurality of reception devices coupled in the daisy chain.
(3) The communication apparatus according to (1) or (2), in which the transmission device is configured to transmit the data signal and the clock signal to each of the plurality of reception devices coupled in the daisy chain.
(4) The communication apparatus according to any one of (1) to (3), in which the plurality of reception devices includes a first reception device configured to output the chip select signal input from the transmission device and a second reception device configured to output the chip select signal input from the first reception device.
(5) The communication apparatus according to claim 4, in which the first reception device is configured to receive a predetermined number of bits of first data included in the data signal input from the transmission device and then output the chip select signal to the second reception device.
(6) The communication apparatus according to (4) or (5), in which
   the plurality of reception devices includes a third reception device configured to output the chip select signal input from the second reception device, and
   the second reception device is configured to receive a predetermined number of bits of second data after the first data included in the data signal and then output the chip select signal to the third reception device.
(7) The communication apparatus according to claim 1, in which the reception devices are configured to synchronize with the clock signal input from the transmission device and to output the chip select signal.
(8) The communication apparatus according to any one of (1) to (7), in which the reception devices are configured to output the chip select signal with a modified pulse width.
(9) The communication apparatus according to (8), in which the transmission device is configured to receive the chip select signal with the pulse width modified by the plurality of reception devices.
(10) The communication apparatus according to any one of (1) to (9), in which the transmission device is configured to transmit the data signal including data related to the number of bits of data to be transmitted to the reception devices.
(11) The communication apparatus according to any one of (1) to (10), in which
   the reception device includes a driving section configured to drive a light-emitting element, and
   the transmission device includes a control section configured to control the driving section.
(12) A driving apparatus including:
   a plurality of driving sections configured to drive light-emitting elements; and
   a control section that includes a serial peripheral interface and is configured to control the driving sections,
   in which the driving sections are configured to receive a data signal and a clock signal from the control section, and
   the plurality of driving sections are coupled in a daisy chain via a signal line configured to communicate a chip select signal.
(13) A display apparatus including:
   a light source including a light-emitting element; and
   a light-emission control section configured to control the light source,
      in which the light-emission control section includes
         a plurality of driving sections configured to drive the light-emitting elements, and
         a control section that includes a serial peripheral interface and is configured to control the driving sections,
      the driving sections are configured to receive a data signal and a clock signal from the control section, and
      the plurality of driving sections are coupled in a daisy chain via a signal line configured to communicate a chip select signal.
(14) A communication method between a transmission device including a serial peripheral interface and a plurality of reception devices coupled in a daisy chain, the communication method including:
   transmitting a chip select signal to only one of the plurality of reception devices; and
   transmitting the chip select signal from the one of the reception devices.

The present application claims the benefit of Japanese Priority Patent Application JP2022-121130 filed with the Japan Patent Office on July 29, 2022, the entire contents of which are incorporated herein by reference.

It should be understood by those skilled in the art that various modifications, combinations, sub-combinations and alternations may occur depending on design requirements and other factors insofar as they are within the scope of the appended claims or the equivalents thereof.

## Claims

1. A communication apparatus comprising:
a transmission device including a serial peripheral interface; and
a plurality of reception devices configured to receive a data signal and a clock signal from the transmission device,
wherein the plurality of reception devices are coupled in a daisy chain via a signal line configured to communicate a chip select signal.

2. The communication apparatus according to claim 1, wherein the transmission device is configured to transmit the chip select signal to only one of the plurality of reception devices coupled in the daisy chain.

3. The communication apparatus according to claim 1, wherein the transmission device is configured to transmit the data signal and the clock signal to each of the plurality of reception devices coupled in the daisy chain.

4. The communication apparatus according to claim 1, wherein the plurality of reception devices includes a first reception device configured to output the chip select signal input from the transmission device and a second reception device configured to output the chip select signal input from the first reception device.

5. The communication apparatus according to claim 4, wherein the first reception device is configured to receive a predetermined number of bits of first data included in the data signal input from the transmission device and then output the chip select signal to the second reception device.

6. The communication apparatus according to claim 5, wherein
the plurality of reception devices includes a third reception device configured to output the chip select signal input from the second reception device, and
the second reception device is configured to receive a predetermined number of bits of second data after the first data included in the data signal and then output the chip select signal to the third reception device.

7. The communication apparatus according to claim 1, wherein the reception devices are configured to synchronize with the clock signal input from the transmission device and to output the chip select signal.

8. The communication apparatus according to claim 1, wherein the reception devices are configured to output the chip select signal with a modified pulse width.

9. The communication apparatus according to claim 8, wherein the transmission device is configured to receive the chip select signal with the pulse width modified by the plurality of reception devices.

10. The communication apparatus according to claim 1, wherein the transmission device is configured to transmit the data signal including data related to the number of bits of data to be transmitted to the reception devices.

11. The communication apparatus according to claim 1, wherein
the reception device comprises a driving section configured to drive a light-emitting element, and
the transmission device comprises a control section configured to control the driving section.

12. A driving apparatus comprising:
a plurality of driving sections configured to drive light-emitting elements; and
a control section that includes a serial peripheral interface and is configured to control the driving sections,
wherein the driving sections are configured to receive a data signal and a clock signal from the control section, and
the plurality of driving sections are coupled in a daisy chain via a signal line configured to communicate a chip select signal.

13. A display apparatus comprising:
a light source including a light-emitting element; and
a light-emission control section configured to control the light source,
wherein the light-emission control section includes
a plurality of driving sections configured to drive the light-emitting elements, and
a control section that includes a serial peripheral interface and is configured to control the driving sections,
the driving sections are configured to receive a data signal and a clock signal from the control section, and
the plurality of driving sections are coupled in a daisy chain via a signal line configured to communicate a chip select signal.

14. A communication method between a transmission device including a serial peripheral interface and a plurality of reception devices coupled in a daisy chain, the communication method comprising:
transmitting a chip select signal to only one of the plurality of reception devices; and
transmitting the chip select signal from the one of the reception devices.
